Europäisches Patentamt

European Patent Office

Office européen des brevets

(19)

(11) Numéro de publication: **0 296 934**
**A1**

(12) **DEMANDE DE BREVET EUROPEEN**

(21) Numéro de dépôt: **88401447.3**

(22) Date de dépôt: **13.06.88**

(51) Int. Cl.⁴: **B 60 S 1/36**

(30) Priorité: **17.06.87 FR 8708444**

(43) Date de publication de la demande:
**28.12.88 Bulletin 88/52**

(84) Etats contractants désignés: **DE ES IT**

(71) Demandeur: **VALEO SYSTEMES D'ESSUYAGE**
**21-27 Boulevard Gambetta**
**F-92130 Issy-les-Moulineaux (FR)**

(72) Inventeur: **Maubray, Daniel Lucien**
**16 boulevard Rodin**
**F-92130 Issy-les-Moulineaux (FR)**

(74) Mandataire: **Peuscet, Jacques et al**
**Cabinet Peuscet 68, rue d'Hauteville**
**F-75010 Paris (FR)**

(54) **Dispositif d'essuyage à trajectoire non circulaire.**

(57) Le dispositif d'essuyage comprend un premier arbre (1), monté tournant par rapport à un bâti (B) et entraîné, à partir d'une source motrice (M) en un premier mouvement de rotation alternatif. Une manivelle (3) est calée sur l'arbre (1) et porte, vers son extrémité éloignée dudit arbre, un second arbre (4) monté libre en rotation par rapport à la manivelle (3). Des moyens d'entraînement (E) sont prévus pour communiquer un second mouvement de rotation alternatif au second arbre (4) de sorte que la combinaison des deux mouvements de rotation alternatifs produisent un balayage non circulaire. Les moyens d'entraînement (E) comprennent : un organe d'entraînement (7), coaxial au premier arbre (1) mais monté libre en rotation par rapport à cet arbre ainsi que par rapport au bâti (B) ; des moyens de rotation (R) pour communiquer à cet organe (7) un mouvement de rotation alternatif à partir de ladite source motrice (M), et des moyens de transmission (T) du mouvement de rotation de l'organe (7) au second arbre (4).

FIG. 1

**Description**

## DISPOSITIF D'ESSUYAGE A TRAJECTOIRE NON CIRCULAIRE.

L'invention est relative à un dispositif d'essuyage à trajectoire non circulaire permettant d'augmenter, de manière sensible, la surface essuyée, notamment, dans le cas d'un pare-brise de véhicule automobile, dans la région des angles supérieurs de ce pare-brise. Un tel dispositif est particulièrement intéressant dans le cas d'un essuie-glace monobalai.

Il a déjà été proposé, par exemple dans la demande de brevet allemand n° P 33 32 931 d'entraîner, à partir d'une source motrice un premier arbre portant à son extrémité un boîtier dans lequel sont montés deux arbres secondaires libres en rotation par rapport audit boîtier sur lesquels sont bloquées des manivelles entraînant un balai d'essuie-glace. Des moyens sont prévus afin d'entraîner les deux arbres secondaires en rotation par rapport audit boîtier. Le balai d'essuie-glace étant lié aux deux manivelles, il reste, au cours du mouvement, toujours parallèle à un plan passant par les axes des deux arbres secondaires, ledit balai garde ainsi une position relative par rapport au boîtier constante.

La présente invention tend à obtenir une surface essuyée plus importante en utilisant un dispositif du genre de ceux qui comprennent un premier arbre, monté tournant par rapport à un bâti et entraîné, à partir d'une source motrice, en un premier mouvement de rotation alternatif, arbre sur lequel est calé une manivelle qui porte, vers son extrémité éloignée dudit arbre, un second arbre monté libre en rotation par rapport à la manivelle et sur lequel est bloqué un porte-balai d'essuie-glace, des moyens d'entraînement étant prévus pour communiquer un second mouvement de rotation alternatif au second arbre, de sorte que la combinaison des deux mouvements de rotation alternatifs produise un balayage non circulaire, le porte-balai se déplaçant en rotation par rapport à la manivelle.

Un premier objet de l'invention est de fournir un dispositif d'essuyage de ce genre qui présente une bonne souplesse d'adaptation de manière à permettre d'ajuster au mieux la trajectoire du balai d'essuie-glace à la surface à essuyer. On sait, en effet, que les surfaces à essuyer peuvent varier de manière sensible, comme c'est le cas pour les pare-brises qui diffèrent sensiblement d'un véhicule à l'autre.

Un autre objet de l'invention est de fournir un dispositif d'essuyage qui soit d'une construction simple et robuste et qui permette d'utiliser un porte-balai standard.

D'une manière générale, l'invention a pour but de rendre ce dispositif d'essuyage tel qu'il réponde mieux que jusqu'à présent aux diverses exigences de la pratique.

Selon l'invention, un dispositif d'essuyage à trajectoire non circulaire, du genre défini précédemment, est caractérisé par le fait que les susdits moyens d'entraînement comprennent un organe d'entraînement coaxial au premier arbre mais monté libre en rotation par rapport à cet arbre ainsi que par rapport au bâti ; des moyens de rotation pour communiquer à cet organe un mouvement de rotation alternatif à partir de ladite source motrice, et des moyens de transmission du mouvement de rotation de l'organe au second arbre.

Avantageusement, l'organe d'entraînement comprend un pignon, tandis que les susdits moyens de transmission comprennent un pignon conjugué calé sur le second arbre.

Le pignon conjugué peut coopérer directement avec le premier pignon. En variante, un pignon intermédiaire monté libre en rotation sur la manivelle est prévu pour transmettre le movement du premier pignon au pignon calé sur le second arbre.

De préférence, le premier arbre est creux et l'organe d'entraînement est calé sur un troisième arbre coaxial au premier et le traversant, une extrémité de ce troisième arbre étant en saillie par rapport à la manivelle, du côté du porte-balai, et portant ledit organe d'entraînement, tandis que l'autre extrémité de ce troisième arbre est en saillie du côté opposé par rapport au premier arbre, de manière à pouvoir être entraînée par la susdite source motrice.

Cette extrémité du troisième arbre, éloignée du porte-balai, est de préférence munie d'un pignon propre à coopérer avec une roue dentée entraînée par la source motrice, tandis que l'extrémité voisine de l'arbre creux est également équipée d'un pignon propre à coopérer avec une autre roue dentée destinée à être entraînée par la même source motrice, les rapports de démultiplication entre les deux couples de pignons et de roues dentées étant choisis à volonté, selon la trajectoire souhaitée.

Le premier arbre creux est avantageusement monté dans un coussinet fixé sur le bâti, notamment constitué par une paroi de carrosserie ; la manivelle et les pignons d'entraînement de l'arbre du porte-balai d'essuie-glace sont situés du côté extérieur relativement à la paroi, tandis que les pignons et roues dentées pour entraîner le premier et le troisième arbre ainsi que la source motrice, sont situés du côté opposé relativement à la paroi.

La source motrice peut comprendre un arbre moteur parallèle au premier arbre, le second arbre étant également parallèle à ce premier arbre ; l'axe de l'arbre moteur est avantageusment situé à une distance du premier arbre égale à la distance entre les axes des premier et deuxième arbres.

Avantageusement, les rapports de démultiplication sont choisis de telle sorte que pour chaque balayage se produisent trois diminutions de la longueur effective de balayage, respectivement vers les deux extrémités du balayage et sensiblement à mi-course, et deux élongations intermédiaires.

L'invention consiste, mises à part les dispositions exposées ci-dessus, en un certain nombre d'autres dispositions dont il sera plus explicitment question ci-après à propos d'un mode de réalisation particulier décrit avec référence aux dessins ci-annexés, mais qui n'est nullement limitatif.

La figure 1, de ces dessins, est une coupe longitudinale d'un dispositif d'essuyage à trajectoire non circulaire conforme à l'invention, avec parties en extérieur.

La figure 2 est un diagramme des positions successives du balai d'essuie-glace avec le dispositif de la figure 1, avec représentation du contour de la surface essuyée.

La figure 3, enfin, est un diagramme semblable à celui de la figure 2 obtenu avec une variante du dispositif de la figure 1.

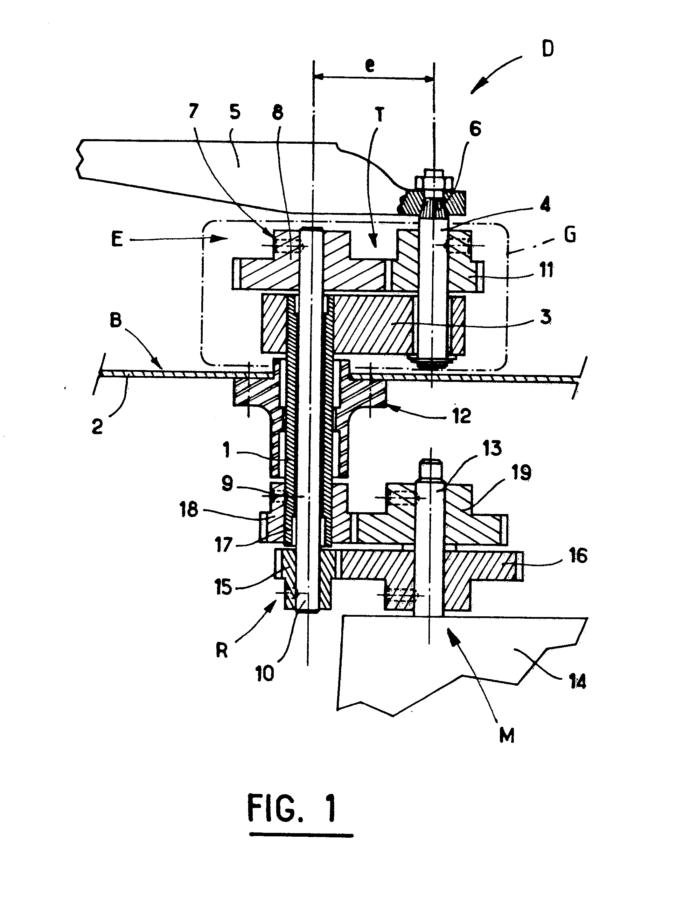

En se reportant à la figure 1 des dessins, on peut voir un dispositf d'essuyage D à trajectoire non circulaire comprenant un premier arbre 1 monté tournant par rapport à un bâti B constitué par une paroi 2 de carrosserie de véhicule automobile. L'arbre 1 est entraîné, à partir d'une source motrice M, en un premier mouvement de rotation alternatif.

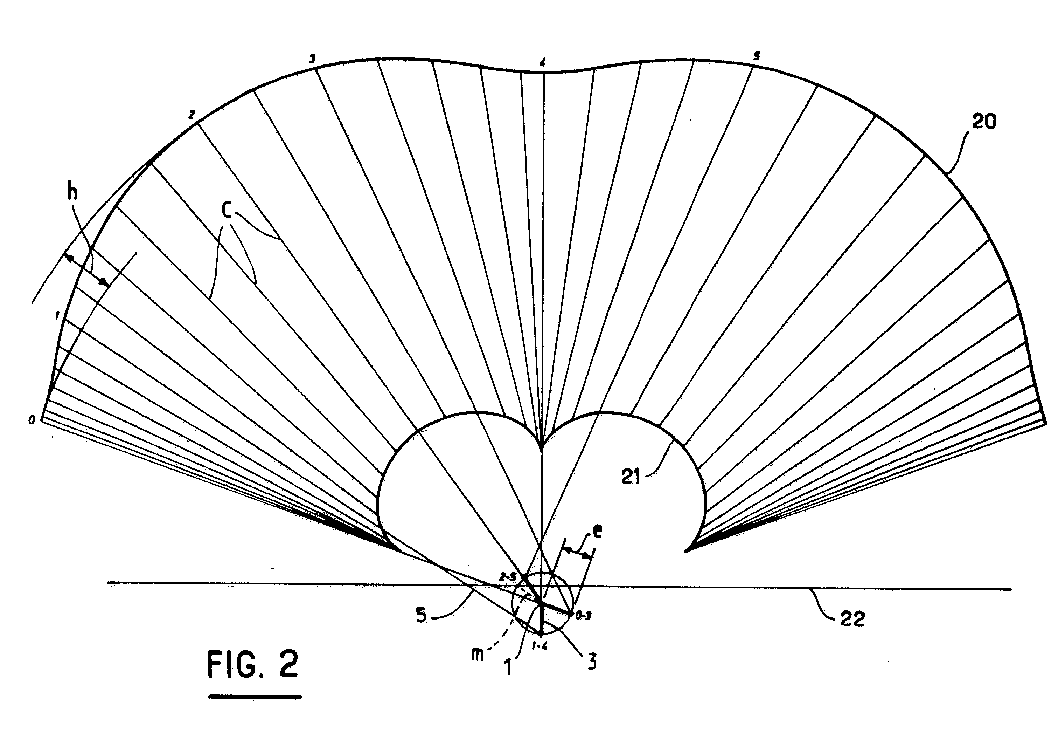

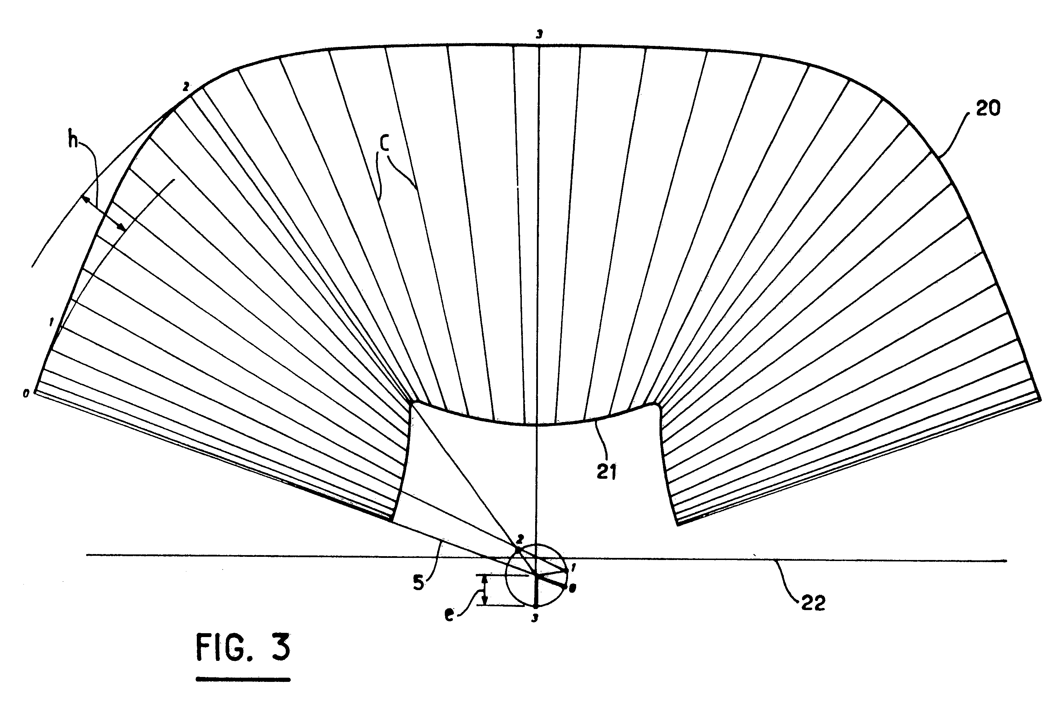

Une manivelle 3, s'étendant radialement, est calée sur l'arbre 1, a l'extrémité de cet arbre située du côté de la paroi 2 opposé à la source motrice M. La manivelle 3 porte, vers son extrémité éloignée de l'arbre 1, un second arbre 4, d'axe parallèle à celui de l'arbre 1. Cet axe 4 est monté libre en rotation par rapport à la manivelle 3. Un porte-balai 5 d'essuie-glace est bloqué sur un épaulement tronconique 6 de l'arbre 4, situé vers l'extrémité de cet arbre éloignée de la paroi 2. Un bras d'essuie-glace, non représenté, est fixé sur le porte-balai 5, ce bras d'essuie-glace portant, à son extrémité, un balai d'essuie-glace schématisé par un trait C sur les figures 2 et 3.

Des moyens d'entraînement E sont prévus pour communiquer un second mouvement de rotation alternatif au second arbre 4.

Les moyens d'entraînement E comprennent un organe d'entraînement 7, coaxial au premier arbre 1, mais monté libre en rotation par rapport à cet arbre 1, ainsi que par rapport au bâti B. Des moyens de rotation R sont prévus pour communiquer à cet organe 7 un mouvement de rotation alternatif à partir de la source motrice M. Des moyens T sont en outre prévus pour transmettre le mouvement de rotation de l'organe 7 au second arbre 4.

Avantageusement, le premier arbre 1 est creux et a la forme d'un manchon cylindrique ; l'organe d'entraînement 7 comprend un pignon 8 calé sur l'extrémité d'un troisième arbre 9 coaxial à l'arbre creux 1 et le traversant. L'extrémité de ce troisième arbre 9 sur laquelle est fixé le pignon 8 fait saillie, par rapport à la manivelle, du côté du porte-balai 5.

L'autre extrémité 10 de cet arbre 9 est en saillie, du côté opposé, par rapport au premier arbre 1 de manière à pouvoir être entraînée par la susdite source motrice M.

Les moyens de transmission T comprennent un pignon 11, conjugué du pignon 8, calé sur le second arbre 4. Selon la réalisation de la figure 1, le pignon 11 coopère directement avec le pignon 7.

En variante, il est possible de prévoir un pignon intermédiaire (non représenté) monté libre en rotation sur la manivelle 3, ce pignon intermédiaire engrenant avec le pignon 8 et transmettant le mouvement de rotation du pignon 8 au pignon 11 dont les dents ne coopéreraient pas, alors, avec celles du pignon 8. Selon cette variante, le sens de rotation du porte-balai 5 et du bras, relativement au bâti B est inversé par rapport au sens de rotation de la manivelle 3 relativement à ce même bâti B.

L'ensemble de la manivelle 3 et des moyens de transmission T est généralement enfermé dans un carter G qui tourne avec la manivelle 3 autour de l'axe de l'arbre 11. L'arbre 4 fait saillie hors de ce carter par son extrémité munie de l'épaulement 6.

L'arbre creux 1 est monté rotatif dans un coussinet 12 fixé sur le bâti B et situé, pour l'essentiel, du côté de ce bâti opposé au porte-balai 5. L'arbre 1 est arrêté en translation, relativement au coussinet 12, par tout moyen approprié classique autorisant la liberté en rotation.

La source motrice M est avantageusement constituée par l'arbre de sortie 13 d'un moteur 14 à mouvement de rotation alternatif. Selon une autre possibilité, la source M serait constituée par l'arbre de sortie d'un système bielle-manivelle classique.

L'extrémité 10 du troisième arbre 9 est munie d'un pignon 15 propre à coopérer avec une roue dentée 16 calée sur l'arbre 13.

L'extrémité voisine 17 du premier arbre creux 1 est également équipée d'un pignon 18 propre à coopérer avec l'autre roue dentée 19 calée sur l'extrémité de l'arbre 13, et donc entraînée par la même source motrice M que la roue 16 située entre la roue 19 et le moteur 14.

Ainsi, dans le dispositif d'essuyage conforme à l'invention deux chaînes cinématiques transmettent un mouvement alternatif, à partir du même arbre 13, respectivement à la manivelle 3 et au porte-balai 5.

La première chaîne cinématique pour l'entraînement de la manivelle 3, comprend la roue 19, le pignon 18 et l'arbre 1 sur lequel est calée la manivelle 3.

La deuxième chaîne cinématique, pour l'entraînement du porte-balai 5, comprend la roue 16, le pignon 15, l'arbre 9, le pignon 8 et le pignon 11 calé sur l'arbre 4 sur lequel le porte-balai 5 est fixé.

Les rapports de démultiplication de ces deux chaînes cinématiques peuvent être choisis à volonté, selon la surface d'essuyage souhaitée.

Avantageusement, ces rapports de démultiplication sont choisis de telle sorte que pour un balayage, trois diminutions de longueur effective du bras d'essuie-glace se produisent respectivement vers les deux extrémités de la surface balayée et dans la zone médiane, et deux extensions intermédiaires.

L'axe géométrique de l'arbre 13 est de préférence situé à une distance de l'axe géométrique de l'arbre 9 égale à la distance $e$ entre les axes des arbres 9 et 4.

Le fonctionnment du dispositif d'essuyage D est expliqué ci-après à l'aide du diagramme de la figure 2 sur lequel les positions successives du balai d'essuie-glace C schématisé par un simple trait, sont représentées.

Six positions angulaires de la manivelle 3, du porte-balai 5 est du balai d'essuie-glace ont été plus spécialement identifiées sur la figure 2 par des chiffres arabes allant de 0 à 5, les dimensions de ces chiffres étant plus petites que celles des chiffres utilisés pour les références désignant les pièces du dispositif.

La position 0, de la figure 2, est considérée comme étant la position de départ. La manivelle 3 est sensiblement alignée avec le porte-balai 5 ; toutefois, la manivelle 3 s'étend du côté de l'axe 9 opposé au balai d'essuie-glace C. Il en résulte que la distance e entre les axes des arbres 4 et 9 vient se retrancher de la longueur du bras de balai d'essuie-glace. Cette position 0 correspond donc à une diminution maximale de la longueur effective du bras d'essuie-glace.

La manivelle 3 commence son mouvement dans les sens des aiguilles d'une montre autour de l'axe géométrique de l'arbre 1, par rapport au bâti B.

Par un choix judicieux des rapports de démultiplication, on obtient que le porte-balai 5 tourne par rapport au bâti B dans le même sens que la manivelle 3, c'est-à-dire dans le sens des aiguilles d'une montre, mais à un vitesse angulaire inférieure.

Ainsi, le porte-balai fait, avec la manivelle, un angle qui varie au cours du balayage afin d'obtenir une plus grande surface balayée.

Lorsque la manivelle arrive dans la position 1 après avoir tourné d'environ 60°, le porte-balai 5 n'est plus aligné avec la manivelle et l'extrémité radiale extérieure du balai C est située dans la position 1.

Lorsque la manivelle 3 a tourné d'environ 200° par rapport à sa position de départ, elle atteint la position 2 de la figure 2 pour laquelle le porte-balai 5 est aligné avec cette manivelle et dans son prolongement. La longueur effective du bras d'essuie-glace est alors maximale et l'extrémité du balai C située à l'extérieur est représentée par le point 2.

Il est a noter que la différence h entre la longueur effective maximale au point 2 et la longueur effective minimale au point 0 du bras d'essuie-glace est égale à deux fois la distance e entre les axes des arbres 1 et 4.

La manivelle continuant son mouvement de rotation dans le sens des aiguilles d'une montre passe par la position 3 de la figure 2 à laquelle correspond une position 3 du balai d'essuie-glace. La longueur effective diminue à nouveau.

La manivelle atteint la position 4 qui est distante angulairement, dans le sens des aiguilles d'une montre, d'environ 200° par rapport à la position 2 et qui correspond à la moitié de la course angulaire. Le porte-balai 5 est de nouveau aligné avec la manivelle 3 mais orienté en sens opposé de sorte que la longueur effective de balayage (position 4) est de nouveau minimale.

La manivelle poursuit son mouvement de rotation dans le sens des aiguilles d'une montre et passe par la position 5 à laquelle correspond la position 5 du balai. La longueur de balayage augmente à nouveau pour passer par un deuxième maximum et pour diminuer jusqu'à la position extrême droite de balayage.

Cette position extrême correspond à l'inversion du mouvement de rotation de l'arbre 13 et donc à l'inversion du mouvement de rotation de la manivelle 3 et du porte-balai 5.

Lors du trajet retour, la même surface est essuyée qu'à l'aller, mais en sens inverse.

Le contour extérieur 20 et le contour intérieur 21, non circulaires, de la surface essuyée, sont bien visibles sur la figure 2.

La figure 3 correspond au diagramme d'essuyage obtenu lorsque l'entraînement du pignon 11 calé sur l'arbre 4 est assuré par un pignon intermédiaire (non représenté) qui engrène avec le pignon 8. Pour un même sens de rotation du porte-balai 5, le sens de rotation de la manivelle 3 est inversé.

Sur la figure 3, la manivelle part de la position 0 en tournant dans le sens contraire des aiguilles d'une montre, tandis que le porte-balai 5 et avec lui le bras et le balai d'essuie-glace tournent dans le sens des aiguilles d'une montre.

La position 0, ou position extrême gauche de balayage, correspond à la longueur minimale effectivve de balayage.

La position 1 est une position intermédiaire.

La position 2 correspond à l'élongation maximale.

La position médiane 3 correspond à la diminution de la zone médiane de balayage.

La rotation de la manivelle dans le sens contraire des aiguilles d'une montre se poursuivrait jusqu'à la position extrême droite de balayage, avec passage par une nouvelle élongation maximale.

Dans l'exemple envisagé, la manivelle 3, au cours d'un balayage, par exemple aller, effectue une rotation d'environ deux tours un tiers, par rapport au bâti, tandis que le porte-balai effectue une rotation d'environ un tiers de tour par rapport à ce même bâti. La vitesse angulaire de la manivelle 3 relativement au bâti B est donc environ sept fois supérieure à la vitesse angulaire du porte-balai 5 par rapport au bâti B. Les diamètres des pignons et roues des deux chaînes cinématiques sont choisis en conséquence.

En se reportant de nouveau à la figure 2, on voit qu'en faisant arrêter et partir la manivelle 3 dans la position m représentée en tirets et située à environ 160° avant la position 0 (selon le sens contraire des aiguilles d'une montre), le balai d'essuie-glace C sera orienté suivant la droite 22, orthogonale à la direction de la position moyenne 4. Cette condition sera obtenue en choisissant les diamètres des pignons et des roues des deux chaînes cinématiques différentes de ceux employés pour un angle de balayage plus petit que 180°. La position extrême droite du balai C sera également située sur la droite 22. Le porte-balai 5 et le balai C décriront, ainsi, un angle de balayage de 180°. La droite 22 des positions extrêmes de balayage passe au-dessus de l'arbre 9 et de l'arbre 11 qui peuvent traverser la paroi 2 au-dessous de la glace à essuyer. L'arbre 4 ne traverse pas cette glace.

Il est ainsi possible d'effectuer un balayage sur 180° sans avoir à percer la glace pour le passage de l'arbre d'entraînement du bras d'essuie-glace, cette disposition étant particulièrement intéressante dans le cas d'un essuyage de vitre arrière d'un véhicule.

**Revendications**

1. Dispositif d'essuyage à trajectoire non circulaire comprenant un premier arbre (1), monté tournant par rapport à un bâti (B) et entraîné, à partir d'une source motrice (M), en un premier mouvement de rotation alternatif, arbre sur lequel est calée une manivelle (3) qui porte, vers son extrémité éloignée dudit arbre, un second arbre (4) monté libre en rotation par rapport à la manivelle (3) et sur lequel est bloqué un porte-balai (5) d'essuie-glace, des moyens d'entraînement (E) étant prévus pour communiquer un second mouvement de rotation alternatif au second arbre (4), de sorte que la combinaison des deux mouvements de rotation alternatifs produisent un balayage non circulaire, caractérisé par le fait que les susdits moyens d'entraînement (E) comprennent un organe d'entraînement (7), coaxial au premier arbre (1) mais monté libre en rotation par rapport à cet arbre (1) ainsi que par rapport au bâti (B), des moyens de rotation (R) pour communiquer à cet organe (7) un mouvement de rotation alternatif à partir de ladite source motrice (M) et des moyens de transmission (T) du mouvement de rotation dudit organe (7) au second arbre (4).

2. Dispositif selon la revendication 1, caractérisé par le fait que l'organe d'entraînement (7) comprend un pignon (8), tandis que les susdits moyens de transmission (T) comprennent un pignon conjugué (11) calé sur le second arbre (4).

3. Dispositif selon la revendication 2, caractérisé par le fait que le pignon conjugué (11) coopère directement avec le pignon (8) constituant l'organe d'entraînement (7).

4. Dispositif selon la revendication 2, caractérisé par le fait qu'un pignon intermédiaire est monté libre en rotation sur la manivelle pour transmettre le mouvement de rotation du pignon (7) constituant l'organe d'entraînement au pignon calé sur le second arbre (4).

5. Dispositif selon l'une quelconque des revendications précédentes, caractérisé par le fait que le premier arbre (1) est creux et que l'organe d'entraînement (7) est calé sur un troisième arbre (9) coaxial au premier (1) et le traversant, une extrémité de ce troisième arbre (9) étant en saillie par rapport à la manivelle (3), du côté du porte-balai (5), et portant ledit organe d'entraînement (7), tandis que l'autre extrémité (10) est en saillie, du côté opposé, par rapport au premier arbre (1), de manière à pouvoir être entraîné par la susdite source motrice (M).

6. Dispositif selon la revendication 5, caractérisé par le fait que l'extrémité (10) du troisième arbre, opposée au porte-balai (5), est munie d'un pignon (15) propre à coopérer avec une roue dentée (16) entraînée par la source motrice (M), tandis que l'extrémité voisine du premier arbre (1) est également équipée d'un pignon (18) propre à coopérer avec une autre roue dentée (19) destinée à être entraînée par la même source motrice (M).

7. Dispositif selon la revendication 6, dans lequel la source motrice (M) comprend un arbre moteur (13) parallèle au premier arbre (1), caractérisé par le fait que l'axe de cet arbre moteur (13) est situé à une distance de l'axe du premier arbre (1) égale à la distance (e) entre l'axe du deuxième arbre (4) et l'axe du premier arbre (1).

8. Dispositif selon la revendication 5, caractérisé par le fait que l'arbre creux (1) est monté dans un coussinet (12) fixé sur le bâti (B).

9. Dispositif selon l'une quelconque des revendications précédentes, caractérisé par le fait que les rapports de démultiplication pour la tranmission des mouvements rotatifs sont choisis de telle sorte qu'au cours d'un balayage, la longueur effective du bras passe par trois minimums dont deux situés vers les extrémités de la zone balayée et un situé vers la zone médiane, et par deux maximums intermédiaires.

# FIG. 1

0296934

FIG. 2

FIG. 3

Office européen
des brevets

**RAPPORT DE RECHERCHE EUROPEENNE**

Numero de la demande

EP 88 40 1447

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,X | DE-A-3 332 931 (SWF AUTO-ELECTRIC GmbH) <br> * Page 6, ligne 28 - page 7, ligne 31; page 9, ligne 22 - page 11, ligne 25; page 12, ligne 1 - page 13, ligne 3 * | 1-3,5,6,8 | B 60 S 1/36 |
| D,Y | * Revendications 1,2,4,6,7,10,13,15,19,21,24,29 * | 9 | |
| D,A | * Figures 1,3 * <br> --- | 7 | |
| Y | FR-A-2 185 983 (SWF-SPEZIALFABRIK FÜR AUTOZUBEHOR GUSTAV RAU GmbH) <br> * Page 1, ligne 1 - page 2, ligne 1; page 2, ligne 21 - page 3, ligne 26; figures 1-3 * <br> ----- | 9 | |

| | |
|---|---|
| | DOMAINES TECHNIQUES RECHERCHES (Int. Cl.4) |
| | B 60 S |

Le présent rapport a été établi pour toutes les revendications

| Lieu de la recherche | Date d'achèvement de la recherche | Examinateur |
|---|---|---|
| LA HAYE | 06-09-1988 | GEYER J.L. |